# EUROPÄISCHE PATENTANMELDUNG

(11) **EP 4 782 455 A1**
(43) Veröffentlichungstag der Anmeldung: **29.07.2026**
(21) Anmeldenummer: 25153736.1
(22) Anmeldetag: 24.01.2025
(51) Int. Cl.: C07F 9/6596

(54) **SYNTHESE LUFTSTABILER BIARYL-PHOSPHASILINAN-LIGANDEN VIA RADIKAL-INITIIERTER, DOPPELTER GIESE-REAKTION**

(71) Anmelder: Ludwig-Maximilians-Universität München, 80539 München (DE)
(72) Erfinder: TRAPP, Oliver, München (DE); BERTHOLD, Dino, München (DE); KREMSER, Christoph, München (DE); LAUER, Christoph, München (DE)
(74) Vertreter: Weickmann & Weickmann PartmbB

(57) **Zusammenfassung**

Die vorliegende Erfindung betrifft eine neue effiziente Synthesemethode zur Herstellung von Biaryl-Phosphasilinan-Liganden durch eine Radikal-initiierte doppelte Giese-Reaktion von Biarylphosphinen an Divinyl-Verbindungen.

## Beschreibung

Die vorliegende Erfindung betrifft eine neue effiziente Synthesemethode zur Herstellung von Biaryl-Phosphasilinan-Liganden durch eine Radikal-initiierte doppelte Giese-Reaktion von Biarylphosphinen an Divinyl-Verbindungen.

Unter eine Giese-Reaktion wird die Reaktion eines Kohlenstoff- oder Heteroatom-Radikals an eine ungesättigte Kohlenstoff-Kohlenstoff-, Kohlenstoff-Heteroatom- oder Heteroatom-Heteroatom-Bindung unter Ausbildung einer neuen Kohlenstoff-Kohlenstoff-, Heteroatom-Kohlenstoff-, Kohlenstoff-Kohlenstoff- oder Heteroatom-Heteroatom-Bindung verstanden. Neben dieser Bindung wird ebenfalls eine neue Kohlenstoff-Wasserstoff- oder Heteroatom-Wasserstoff-Bindung geschlossen.

In den folgenden Übersichtsartikeln wird die Giese-Reaktion eingehender beschrieben:
a) B. Giese, "Formation of CC Bonds by Addition of Free Radicals to Alkenes" Angew. Chem. Int. Ed. Engl. 1983, 22, 753-764;
b) B. Giese, "Syntheses with Radicals-C-C Bond Formation via Organotin and Organomercury Compounds [New Synthetic Methods (52)]" Angew. Chem. Int. Ed. Engl. 1985, 24, 553-565;
c) G. Bar, A. F. Parsons, "Stereoselective radical reactions" Chem. Soc. Rev. 2003, 32, 251-263;
d) G. S. C. Srikanth, S. L. Castle, "Advances in radical conjugate additions" Tetrahedron 2005, 61, 10377-10441.

WO 2023/088620 A1 beschreibt ein Verfahren zur Herstellung von luftstabilen Biaryl-Phosphasilinan-Liganden durch die teilweise Deprotonierung eines Phosphins und Umsetzung mit einer Dihalogenid-Verbindung.

Eine Aufgabe der vorliegenden Erfindung ist die Lösung folgender Probleme/Nachteile oben genannter Syntheserouten. Die Herstellung der Dihalogenid-Verbindungen aus den Divinyl-Verbindungen ist präparativ aufwendig und führt für verschiedene Substrate zu niedrigen oder keinen Ausbeuten. Deshalb sollte diese Substratklasse, wenn möglich, vermieden und auf die kommerziell erhältlichen Divinyl-Verbindungen zurückgegriffen werden. Des Weiteren sind die Umsetzungen des Biarylphosphins über Deprotonierung und nukleophile Substitution mit einer Dihalogenid-Verbindung mit Nachteilen behaftet. So führt diese Herstellungsmethode für verschiedene Substrate zu niedrigen bis keinen Ausbeuten. Die so erhaltenen Biaryl-Phosphasilinan-Liganden sind zudem oft schwierig bis unmöglich sauber über diese Methode zu isolieren.

Gelöst wird die Aufgabe durch Verwendung einer Giese-Reaktion zur Herstellung einer Biaryl-Phosphasilinan-Verbindung der Formel **(1):** 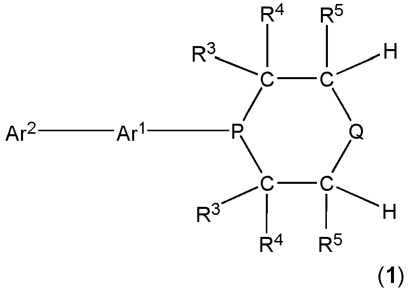 wobei
Ar¹ Phenyl oder Naphthyl ist, wobei das Phenyl oder Naphthyl optional einfach oder mehrfach substituiert sein kann;
Ar² Phenyl oder Naphthyl ist, wobei das Phenyl oder Naphthyl optional einfach oder mehrfach substituiert sein kann;
R³, R⁴ und R⁵ unabhängig voneinander Wasserstoff, Alkyl, z.B. C₁-₄₋Alkyl, Cycloalkyl, z.B. C₅₋₇-Cycloalkyl oder Aryl, z.B. Phenyl sind; oder R³ und R⁴ jeweils eine bivalente Alkylengruppe sind und zusammen mit dem Kohlenstoffatom, mit dem sie verbunden sind, einen Ring, z.B. einen 4- bis 7-gliedrigen und insbesondere einen 5- bis 6-gliedrigen Ring bilden; oder, unter der Maßgabe, zwei Reste R³ oder R⁴, die mit unterschiedlichen Kohlenstoffatomen verbunden sind, jeweils eine bivalente Alkylengruppe sind und zusammen mit den Kohlenstoffatomen, mit denen sie verbunden sind, einen Ring, z.B. einen 4- bis 8-gliedrigen Ring und insbesondere einen 5- bis 6-gliedrigen Ring bilden;
Q SiR⁶R⁷, GeR⁶R⁷, SnR⁶R⁷, AsR⁶, S, SO₂ oder Se ist; und
R⁶ und R⁷ unabhängig voneinander Alkyl, z.B. C₁-₄₋Alkyl, Cycloalkyl, z.B. C₅₋₇-Cycloalkyl oder Aryl, z.B. Phenyl, sind; oder R₆ und R₇ jeweils eine bivalente Alkylengruppe sind und zusammen mit einem Si-, Ge- oder Sn-Atom einen Ring, insbesondere einen 4- bis 7-gliedrigen Ring bilden.

In oben genannter Giese-Reaktion wird ein Phosphin der Formel **(2)**

Ar¹-Ar²-PH₂ **(2)**

wobei
Ar¹ Phenyl oder Naphthyl ist, wobei das Phenyl oder Naphthyl optional einfach oder mehrfach substituiert sein kann;
Ar² Phenyl oder Naphthyl ist, wobei das Phenyl oder Naphthyl optional einfach oder mehrfach substituiert sein kann;
mit einem Radikalinitiator und einer Divinyl-Verbindung der Formel (3) 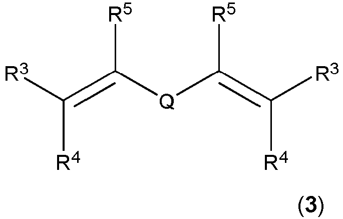 wobei
R³, R⁴ und R⁵ unabhängig voneinander Alkyl, z.B. C₁-₄₋Alkyl, Cycloalkyl, z.B. C₅₋₇-Cycloalkyl oder Aryl, z.B. Phenyl sind; oder R³ und R⁴ jeweils eine bivalente Alkylengruppe sind und zusammen mit dem Kohlenstoffatom, mit dem sie verbunden sind, einen Ring, z.B. einen 4- bis 7-gliedrigen und insbesondere einen 5- bis 6-gliedrigen Ring bilden; oder, unter der Maßgabe, zwei Reste R³ oder R⁴, die mit unterschiedlichen Kohlenstoffatomen verbunden sind, jeweils eine bivalente Alkylengruppe sind und zusammen mit den Kohlenstoffatomen, mit denen sie verbunden sind, einen Ring, z.B. einen 4- bis 8-gliedrigen Ring und insbesondere einen 5- bis 6-gliedrigen Ring bilden;
Q SiR⁶R⁷, GeR⁶R⁷, SnR⁶R⁷, AsR⁶, S, SO₂ oder Se ist; und
R⁶ und R⁷ unabhängig voneinander Alkyl, z.B. C₁-₄₋Alkyl, Cycloalkyl, z.B. C₅₋₇-Cycloalkyl oder Aryl, z.B. Phenyl, sind; oder R₆ und R₇ jeweils eine bivalente Alkylengruppe sind und zusammen mit einem Si-, Ge- oder Sn-Atom einen Ring, insbesondere einen 4- bis 7-gliedrigen Ring bilden,
umgesetzt.

Geeignete Radikalinitiatoren, mit denen sich ein primäres Phosphin durch homolytische Wasserstoff-Abstraktion in Phosphor-Radikal überführen lässt, sind dem Fachmann bekannt. Beispielsweise sind die Radikalinitiatoren Azobis(isobutyronitril), Azobis(cyclohexancarbonitril) und Dibenzoylperoxid.

Das Phosphin der Formel (2) kann beispielsweise erhalten werden, indem eine Verbindung der Formel (4) 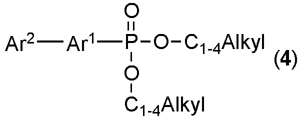 wobei
Ar¹ und Ar² jeweils die oben beschriebene Bedeutung aufweisen;
in Anwesenheit eines Reduktionsmittels zu dem Phosphin der Formel (2) reduziert wird.

Das Reduktionsmittel ist beispielsweise ein Metallhydrid (z.B. Lithiumaluminiumhydrid).

Die Verbindung der Formel **(4)** kann beispielsweise hergestellt werden, indem eine Verbindung der Formel **(5)**

Ar¹-Ar²-X **(5)**

wobei
X Halogen, z.B. Cl, Br oder I, ist, und
Ar¹ und Ar² jeweils die oben beschriebene Bedeutung aufweisen,
mit einer metallorganischen Verbindung, bevorzugt einer Organolithium-Verbindung, z.B. Butyllithium, zu einem Zwischenprodukt umgesetzt wird und das Zwischenprodukt anschließend umgesetzt wird mit einer Verbindung der Formel **(6)**

O=P(O-C₁₋₄-Alkyl)₂X **(6)**

wobei
X Halogen, z.B. Cl, Br oder I ist.

Der Begriff Halogen im Sinne der vorliegenden Erfindung bedeutet F, Cl, Br oder I. Vorzugsweise bedeutet Halogen als Substituent, z.B. als Substituent der Reste R³, R⁴, R⁵, R⁶ und R⁷ CI, Br oder I. In Verbindungen der Formel **(5)** oder **(6)** bedeutet Halogen insbesondere CI, Br oder I.

Der Begriff Alkyl, insbesondere für einen der Reste R³, R⁴, R⁵, R⁶ und R⁷ bedeutet ein geradkettiges oder verzweigtes, unsubstituiertes oder substituiertes C₁-C₁₀ Alkyl, wobei R¹, R², R⁶ und R⁷ vorzugsweise ein C₁₋₈ Alkyl, R³ und R⁴ vorzugsweise ein C₁₋₄ Alkyl und R⁵ vorzugsweise ein C₁₋₅ Alkyl darstellen, wobei jedes Alkyl einen oder mehrere Substituenten unabhängig ausgewählt aus Halogen, Amin, Cycloalkyl, Aryl, O-Alkyl, O-Cycloalkyl oder O-Aryl tragen kann.

Der Begriff Cycloalkyl, insbesondere für einen der Reste R³, R⁴, R⁵, R⁶ und R⁷ bedeutet ein C₃-₈ Cycloalkyl, wobei R¹, R², R⁶ und R⁷ vorzugsweise ein C₃₋₈ Cycloalkyl, R³ und R⁴ vorzugsweise ein C₃₋₅ Cycloalkyl und R⁵ vorzugsweise ein C₃₋₆ Cycloalkyl darstellen, wobei jedes Cycloalkyl einen oder mehrere Substituenten unabhängig ausgewählt aus Halogen, Amin, Alkyl, O-Alkyl, oder O-Cycloalkyl, oder O-Aryl tragen kann. In bestimmten Ausführungsformen kann Cycloalkyl auch ein heterocyclisches Ringsystem mit einem oder mehreren Heteroatome im Ring, z.B. N, O oder S, darstellen. In weiteren Ausführungsformen bedeutet Cycloalkyl ein carbocyclisches Ringsystem.

Der Begriff Aryl, insbesondere für einen der Reste R³, R⁴, R⁵, R⁶ und R⁷ bedeutet C₅-C₁₄ Aryl oder C₆-C₁₄ Aryl, vorzugsweise Phenyl oder Naphthyl und besonders bevorzugt Phenyl, wobei jedes Aryl einen oder mehrere Substituenten unabhängig ausgewählt aus Halogen, Amin, Alkyl, O-Alkyl, Cycloalkyl, O-Cycloalkyl, Aryl oder O-Aryl tragen kann. In bestimmten Ausführungsformen kann Aryl auch ein heterocyclisches Ringsystem mit einem oder mehreren Heteroatome im Ring, z.B. N, O oder S, darstellen. In weiteren Ausführungsformen bedeutet Aryl ein carbocyclisches Ringsystem.

Ar¹ ist ausgewählt aus Phenyl und Naphthyl, wobei das Phenyl oder Naphthyl optional einfach oder mehrfach substituiert ist, z.B. mit Alkyl, insbesondere mit einer oder mehreren C₁-C₆-Alkylgruppen oder Heteroatomgruppen, wie beispielsweise O-Alkyl und Aminen.

Ar² ist ausgewählt aus Phenyl und Naphthyl, wobei das Phenyl oder Naphthyl optional einfach oder mehrfach substituiert ist, z.B. mit Alkyl, insbesondere mit einer oder mehreren C₁-C₆-Alkylgruppen oder Heteroatomgruppen.

Vorzugsweise sind Ar¹ und Ar² jeweils unabhängig ausgewählt aus gegebenenfalls substituiertem Phenyl.

R³, R⁴ und R⁵ sind vorzugsweise ausgewählt aus H, Methyl und Trimethylsilyl.

Q ist vorzugsweise SiR⁶R⁷.

R⁶ und R⁷ sind vorzugsweise jeweils unabhängig ausgewählt aus Methyl, Phenyl, das optional mit einer oder mehreren C₁₋₆-Alkyl-, O-C₁₋₆-Alkyl- oder O-Arylgruppen substituiert ist.

Das durch das erfindungsgemäße Verfahren hergestellte Phosphin kann als Ligand von Metallkomplexen, insbesondere von Palladium- oder Nickelkomplexen verwendet werden. Diese Metallkomplexe können wiederum als Katalysatoren zur Durchführung von chemischen Reaktionen, insbesondere von Kupplungsreaktionen, verwendet werden. So ermöglicht die Verwendung des Phosphins als Ligand in Metallkomplexen, z.B. Pd-Komplexen, die Durchführung einer C-C-Kreuzkupplungsreaktion oder einer C-N-Kreuzkupplungsreaktion, beispielsweise der Buchwald-Hartwig-Kupplung.

Im Folgenden soll die Erfindung durch die nachfolgenden Beispiele näher erläutert werden.

### Beispiele

### Erfindungsgemäße Herstellung eines cyclischen Biarylphosphins

Ein Biaryl-Phosphasilinan der folgenden Formel (7) 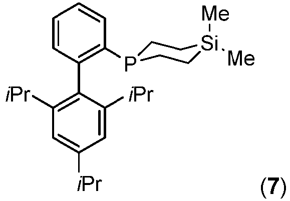 wurde nach dem folgenden Reaktionsschema hergestellt:

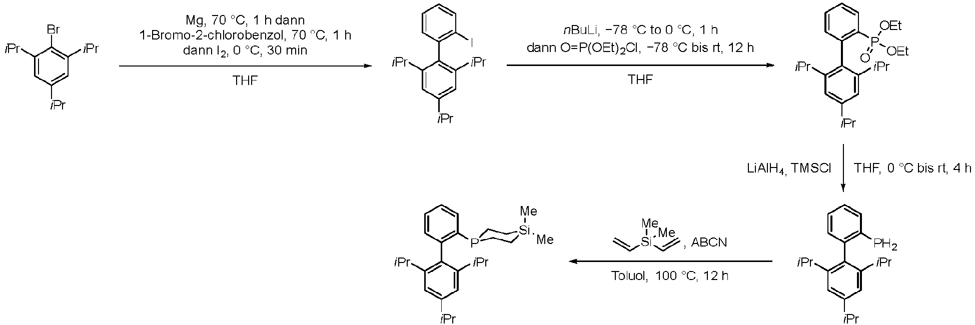

Chemischer Name des cyclischen Biarylphosphins der Formel (7):

### 4,4-Dimethyl-1-(2',4',6'-triisopropyl-[1,1'-biphenyl]-2-yl)-1,4-phosphasilinan 2'-Iod-2,4,6-triisopropyl-1,1'-biphenyl:

Magnesiumspäne (1.75 g, 72.0 mmol, 2.40 equiv.) und 2-Brom-1,3,5-triisopropylbenzol (0.76 mL, 3.0 mmol, 0.10 equiv.) wurden in THF (5 mL) vorgelegt. Die Grignard-Reaktion startete nach Rühren bei Raumtemperatur (RT) für 10 min. Eine Lösung von 2-Brom-1,3,5-triisopropylbenzol (6.8 mL, 27 mmol, 0.90 equiv.) in THF (45 mL) wurde langsam zugetropft und die Lösung wurde für eine Stunde bei 70 °C gerührt. 1-Brom-2-chlorbenzol (3.3 mL, 28 mmol, 0.95 equiv.) wurde über 40 Minuten zugetropft und die Mischung wurde erneut für eine Stunde bei 70 °C gerührt. Iod (8.4 g, 33 mmol, 1.1 equiv.) wurde in THF (50 mL) gelöst und die Lösung wurde langsam zu der eisgekühlten Reaktionsmischung hinzugefügt. Die Mischung wurde abfiltriert, das Filtrat wurde eingeengt und der Rückstand in Et₂O (300 mL) aufgenommen. Die organische Phase wurde mit gesättigter, wässriger Na₂S₂SO₃-Lösung (50 mL) und gesättigter, wässriger NaCl-Lösung (50 mL) gewaschen, über MgSO₄ getrocknet und das organische Lösemittel unter vermindertem Druck entfernt. Der erhaltene Feststoff wurde mit Methanol gewaschen und 2'-lod-2,4,6-triisopropyl-1,1'-biphenyl (8.79 g, 21.6 mmol, 72%) wurde in Form von farblosem Feststoff erhalten.

¹H NMR (400 MHz, CDCl₃) δ [ppm] = 7.95 (dd, *J* = 8.0, 1.2 Hz, 1H), 7.38 (td, *J* = 7.5, 1.3 Hz, 1H), 7.19 (dd, *J* = 7.5, 1.7 Hz, 1H), 7.06 - 7.04 (s, 2H), 7.03 -7.01 (m, 1H), 2.95 (p, *J* = 6.9 Hz, 1H), 2.39 (hept, *J* = 6.9 Hz, 2H), 1.31 (d, *J* = 6.9 Hz, 6H), 1.22 (d, *J* = 6.9 Hz, 6H), 1.01 (d, *J* = 6.9 Hz, 6H).

**¹³C{¹H} NMR** (101 MHz, CDCl₃) δ [ppm] = 148.7, 146.0, 145.9, 139.3, 138.9, 130.7, 128.4, 127.9, 120.9, 102.6, 34.3, 30.8, 25.0, 24.2, 23.6.

### Diethyl(2',4',6'-triisopropyl-[1,1'-biphenyl]-2-yl)phosphonat:

2'-lod-2,4,6-triisopropyl-1,1'-biphenyl (8.13 g, 20.0 mmol, 1.0 equiv.) wurde in THF (100 mL) gelöst und auf -78 °C gekühlt. *n*BuLi (2.5 M in Hexan, 8.8 mL, 22 mmol, 1.1 equiv.) wurde tropfenweise zugefügt. Die Lösung wurde für eine Stunde gerührt und anschließend wurde Diethylchlorphosphat (3.5 mL, 24 mmol, 1.2 equiv.) langsam zugetropft. Die Reaktionsmischung wurde über Nacht auf Raumtemperatur erwärmt und anschließend für zwölf Stunden bei Raumtemperatur gerührt. Die Lösung wurde mit gesättigter, wässriger NH₄Cl-Lösung (150 mL) versetzt, die wässrige Phase abgetrennt und die organische Phase mit AcOEt (3×150 mL) extrahiert. Die vereinigten, organischen Phase wurden mit gesättigter, wässriger NaCl-Lösung (50 mL) gewaschen, über Na₂SO₄getrocknet und das Lösemittel unter vermindertem Druck entfernt. Säulenchromatographie (Silica, Pentan/EtOAc = 10/1 dann 1/1) wurde durchgeführt um Diethyl(2',4',6'-triisopropyl-[1,1'-biphenyl]-2-yl)phosphonat (5.06 g, 12.1 mmol, 61%) als farblosen Feststoff zu erhalten.

**¹H NMR** (400 MHz, CDCl₃) δ [ppm] = 8.09 - 7.93 (m, 1H), 7.51 (tt, *J* = 7.5, 1.5 Hz, 1H), 7.43 (tdd, *J* = 7.6, 3.6, 1.3 Hz, 1H), 7.22 - 7.17 (m, 1H), 7.02 (s, 2H), 3.85 (ddq, *J* = 10.3, 8.7, 7.1 Hz, 2H), 3.63 (ddq, *J* = 10.3, 8.9, 7.1 Hz, 2H), 2.92 (hept, *J* = 6.9 Hz, 1H), 2.41 (hept, *J* = 6.8 Hz, 2H), 1.27 (d, *J* = 7.0 Hz, 6H), 1.20 (d, *J* = 6.8 Hz, 6H), 1.08 (t, *J* = 7.1 Hz, 6H), 0.95 (d, *J* = 6.8 Hz, 6H).

**¹³C{¹H} NMR** (101 MHz, CDCl₃) δ [ppm] =148.1, 146.5, 143.8 (d, J= 9.9 Hz), 135.9 (d, *J* = 3.6 Hz), 133.1 (d, *J =* 10.1 Hz), 131.9 (d, *J =* 15.2 Hz), 131.3 (d, *J =* 3.0 Hz), 128.7 (d, *J =* 191.5 Hz), 126.7 (d, *J* = 14.9 Hz), 120.2, 61.5 (d, *J* = 6.6 Hz), 34.4, 30.7, 25.5, 24.2, 22.6, 16.2 (d, *J* = 5.5 Hz).

**³¹P{¹H} NMR** (162 MHz, CDCl₃) δ [ppm] = 18.2.

### (2',4',6'-Triisopropyl-[1,1'-biphenyl]-2-yl)phosphan:

Diethyl(2',4',6'-triisopropyl-[1,1'-biphenyl]-2-yl)phosphonat (2.92 g, 7.00 mmol, 1.00 equiv.) wurde in THF (20 mL) gelöst. LiAlH₄ (2 M in THF, 9.0 mL, 18 mmol, 2.5 equiv.) wurde in einem weiteren Kolben auf 0 °C gekühlt und TMSCI (Chlor(trimethyl)silan) (2.3 mL, 18 mmol, 2.5 equiv.) wurde tropfenweise hinzugefügt. Die Lösung wurde für 30 min bei 0 °C gerührt und anschließend wurde die Phosphonatlösung hinzugetropft. The Reaktionsmischung wurde für zwölf Stunden gerührt und daraufhin mit entgastem EtOAc (70 mL), gefolgt von entgaster Salzsäure (1 M, 70 mL) gequencht und für 30 min gerührt. Die Lösung wurde mit EtOAc (2×80 mL) extrahiert, die vereinigten, organischen Phasen wurden mit gesättigter, wässriger NaCl-Lösung (20 mL) gewaschen, über Na₂SO₄ getrocknet und das Lösemittel wurde unter vermindertem Druck entfernt um (2',4',6'-Triisopropyl-[1,1'-biphenyl]-2-yl)phosphan (2.12 g, 6.79 mmol, 97%) als farblosen Feststoff zu erhalten.

**¹H NMR** (400 MHz, CDCl₃) δ [ppm] = 7.60 (tdd, *J* = 6.6, 1.5, 0.7 Hz, 1H), 7.32 (td, *J* = 7.5, 1.6 Hz, 1H), 7.28 - 7.22 (m, 2H), 7.13 (ddd, *J* = 7.4, 2.9, 1.5 Hz, 1H), 7.06 (s, 2H), 3.57 (d, *J =* 204.3 Hz, 2H), 2.95 (hept, *J* = 7.1 Hz, 1H), 2.52 - 2.32 (hept, *J* = 7.1 Hz, 2H), 1.31 (d, *J* = 7.0 Hz, 6H), 1.19 (d, *J* = 6.9 Hz, 6H), 1.01 (d, *J* = 6.8 Hz, 6H).

**¹³C{¹H} NMR** (101 MHz, CDCl₃) δ [ppm] = 148.6, 146.1, 144.9 (d, *J =* 13.5 Hz), 136.2 (d, *J* = 3.4 Hz), 134.5 (d, *J* = 11.9 Hz), 130.8 (d, *J =* 7.0 Hz), 130.4 (d, *J =* 2.3 Hz), 128.0, 126.87 (d, *J* = 4.1 Hz), 121.0, 34.4, 30.6, 25.3, 24.2, 23.6 (d, *J* = 1.6 Hz).

**³¹P{¹H} NMR** (162 MHz, CDCl₃) δ [ppm] = -127.28.

### 4,4-Dimethyl-1-(2',4',6'-triisopropyl-[1,1'-biphenyl]-2-yl)-1,4-phosphasilinan:

(2',4',6'-Triisopropyl-[1,1'-biphenyl]-2-yl)phosphan (312 mg, 1.00 mmol, 1.00 equiv.) wurde zusammen mit ABCN (24.4 mg, 100 µmol, 10 mol%) und Dimethyldivinylsilan (0.21 mL, 1.4 mmol, 1.4 equiv.) in einem 10 mL Schlenkrohr vermischt, anschließend wurde Toluol (10 mL) hinzugefügt, das Schlenkrohr komplett verschlossen und für zwölf Stunden bei 100 °C gerührt. Das Lösungsmittel wurde unter vermindertem Druck abgezogen und kaltes Aceton wurde zu dem Rückstand hinzugefügt. Der erhaltene Feststoff wurde abfiltriert und mit wenig, kaltem Aceton gewaschen, um 4,4-Dimethyl-1-(2',4',6'-triisopropyl-[1,1'-biphenyl]-2-yl)-1,4-phosphasilinan (233 mg, 0.550 mmol, 55%) als farblosen Feststoff zu erhalten.

**¹H NMR** (400 MHz, CDCl₃) δ [ppm] = 7.68 (ddd, *J* = 7.6, 3.4, 1.5 Hz, 1H), 7.50 - 7.28 (m, 2H), 7.16 - 7.06 (m, 1H), 7.02 (s, 2H), 2.95 (hept, *J* = 6.9 Hz, 1H), 2.40 (hept, *J* = 6.7 Hz, 2H), 2.00 - 1.63 (m, 4H), 1.31 (d, *J* = 6.9 Hz, 6H), 1.14 (d, *J* = 6.9 Hz, 6H), 1.00 (d, *J* = 6.8 Hz, 6H), 0.98 - 0.71 (m, 3H), 0.11 (s, 3H), -0.06 (s, 3H).

**¹³C{¹H} NMR** (101 MHz, CDCl₃) δ [ppm] = 147.7, 146.5 (d, *J* = 31.3 Hz), 146.0, 139.9 (d, *J* = 14.1 Hz), 136.7 (d, *J* = 6.3 Hz), 130.8 (d, *J* = 5.6 Hz), 130.7 (d, *J* = 2.1 Hz), 128.2, 126.9, 120.6, 34.1, 31.1, 30.7, 25.2, 24.1, 23.9 (d, *J =* 12.4 Hz), 23.2 (d, *J =* 2.3 Hz), 11.7 (d, *J =* 15.8 Hz), -2.1, -4.0.

**³¹P{¹H} NMR** (162 MHz, CDCl₃) δ [ppm] = -36.0.

**HRMS** (EI) m/z: berechnet für C₂₇H₄₀PSi [M-H]⁺:423.2631, gefunden: 423.2631.

## Patentansprüche

1. Verfahren zur Herstellung einer Phosphasilinan-Verbindung der allgemeinen Formel **(1)** 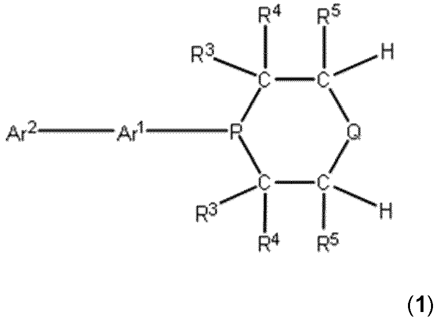 wobei
Ar¹ Phenyl oder Naphthyl ist, wobei das Phenyl oder Naphthyl optional einfach oder mehrfach substituiert sein kann;
Ar² Phenyl oder Naphthyl ist, wobei das Phenyl oder Naphthyl optional einfach oder mehrfach substituiert sein kann;
R³, R⁴ und R⁵ unabhängig voneinander Wasserstoff, Alkyl, insbesondere C₁-₄₋Alkyl, Cycloalkyl, insbesondere C₅₋₇-Cycloalkyl, oder Aryl, insbesondere Phenyl, sind; oder R³ und R⁴ jeweils eine bivalente Alkylengruppe sind und zusammen mit dem Kohlenstoffatom, mit dem sie verbunden sind, einen Ring, z.B. einen 4- bis 7-gliedrigen und insbesondere einen 5- bis 6-gliedrigen Ring bilden; oder, unter der Maßgabe, zwei Reste R³ oder R⁴, die mit unterschiedlichen Kohlenstoffatomen verbunden sind, jeweils eine bivalente Alkylengruppe sind und zusammen mit den Kohlenstoffatomen, mit denen sie verbunden sind, einen Ring, z.B. einen 4- bis 8-gliedrigen Ring und insbesondere einen 5- bis 6-gliedrigen Ring bilden;
Q SiR⁶R⁷, GeR⁶R⁷, SnR⁶R⁷, AsR⁶, S, SO₂ oder Se ist; und
R⁶ und R⁷ unabhängig voneinander Alkyl, insbesondere C₁-₄₋Alkyl, Cycloalkyl, insbesondere C₅₋₇-Cycloalkyl oder Aryl, insbesondere Phenyl, sind; oder R₆ und R₇ jeweils eine bivalente Alkylengruppe sind und zusammen mit einem Si-, Ge- oder Sn-Atom einen Ring, insbesondere einen 4- bis 7-gliedrigen Ring bilden,
wobei
ein Phosphin der Formel **(2)**
Ar¹-Ar²-PH₂ **(2)**
wobei
Ar¹ Phenyl oder Naphthyl ist, wobei das Phenyl oder Naphthyl optional einfach oder mehrfach substituiert sein kann; und
Ar² Phenyl oder Naphthyl ist, wobei das Phenyl oder Naphthyl optional einfach oder mehrfach substituiert sein kann;
mit einem Radikalinitiator und einer Divinyl-Verbindung der Formel (3) 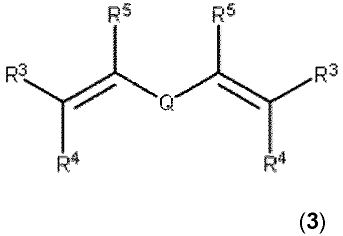 wobei
R³, R⁴ und R⁵ unabhängig voneinander Wasserstoff, Alkyl, Cycloalkyl oder Aryl, sind; oder R³ und R⁴ jeweils eine bivalente Alkylengruppe sind und zusammen mit dem Kohlenstoffatom, mit dem sie verbunden sind, einen Ring bilden; oder, unter der Maßgabe, zwei Reste R³ oder R⁴, die mit unterschiedlichen Kohlenstoffatomen verbunden sind, jeweils eine bivalente Alkylengruppe sind und zusammen mit den Kohlenstoffatomen, mit denen sie verbunden sind, einen Ring bilden;
Q SiR⁶R⁷, GeR⁶R⁷, SnR⁶R⁷, AsR⁶, S, SO₂ oder Se ist; und
R⁶ und R⁷ unabhängig voneinander Alkyl, Cycloalkyl oder Aryl sind; oder R₆ und R₇ jeweils eine bivalente Alkylengruppe sind und zusammen mit einem Si-, Ge- oder Sn-Atom einen Ring bilden;
Q SiR⁶R⁷, GeR⁶R⁷, SnR⁶R⁷, AsR⁶, S, SO₂ oder Se ist; und
R⁶ und R⁷ unabhängig voneinander Alkyl, Cycloalkyl oder Aryl sind; oder R₆ und R₇ jeweils eine bivalente Alkylengruppe sind und zusammen mit einem Si-, Ge- oder Sn-Atom einen Ring bilden,
umgesetzt wird.

2. Verfahren nach Anspruch 1, wobei Ar¹ und Ar² jeweils unabhängig ausgewählt sind aus gegebenenfalls substituiertem Phenyl.

3. Verfahren nach Anspruch 1 oder 2, wobei Q SiR⁶R⁷ ist.

4. Verfahren nach einem der Ansprüche 1-3, wobei das Phosphin der Formel (2) hergestellt wird, indem eine Verbindung der Formel **(4)** 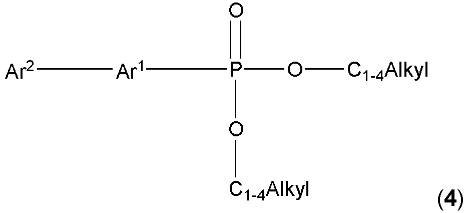 wobei
Ar¹ und Ar² jeweils die in Anspruch 1 oder 2 angegebene Bedeutung aufweisen;
in Anwesenheit eines Reduktionsmittels reduziert wird.

5. Verfahren nach einem der Ansprüche 1-4, wobei die Verbindung der Formel **(4)** hergestellt wird, indem eine Verbindung der Formel **(5)**
Ar¹-Ar²-X **(5)**
wobei
X ein Halogen ist, und
Ar¹ und Ar² jeweils die in Anspruch 1 oder 2 angegebene Bedeutung aufweisen,
mit einer metallorganischen Verbindung, bevorzugt einer Organolithium-Verbindung, zu einem Zwischenprodukt umgesetzt wird und das Zwischenprodukt anschließend umgesetzt wird mit einer Verbindung der Formel **(6)**
O=P(O-C₁₋₄Alkyl)₂X **(6)**
wobei X Halogen ist.

6. Verfahren nach Anspruch 5, wobei X in den Verbindungen der Formel (5) und (6) ausgewählt ist aus Cl, Br und I.
